(19) Europäisches Patentamt
European Patent Office
Office européen des brevets

(11) **EP 4 549 107 A1**

(12) **EUROPEAN PATENT APPLICATION**

(43) Date of publication:
07.05.2025 Bulletin 2025/19

(21) Application number: 24207212.2

(22) Date of filing: 17.10.2024

(51) International Patent Classification (IPC):
**B25J 9/16** (2006.01)  **G05B 19/423** (2006.01)

(52) Cooperative Patent Classification (CPC):
**B25J 9/163; B25J 9/1661; B25J 9/1664;
G05B 19/423;** G05B 2219/39298;
G05B 2219/40115; G05B 2219/40116

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 06.11.2023 IN 202321075843

(71) Applicant: **Tata Consultancy Services Limited
Maharashtra (IN)**

(72) Inventors:
• **DUTTA, Samrat**
  **560066 Bangalore, Karnataka (IN)**
• **SINHA, Rajesh**
  **201305 Noida, Uttar Pradesh (IN)**
• **AMBWANI, Prakash Chanderlal**
  **122004 Gurgaon, Haryana (IN)**

(74) Representative: **Goddar, Heinz J.
Boehmert & Boehmert
Anwaltspartnerschaft mbB
Pettenkoferstrasse 22
80336 München (DE)**

(54) **SYSTEM AND METHOD FOR IMITATION LEARNING IN ROBOTICS FOR COMPLEX TASK LEARNING**

(57) The embodiments of present disclosure herein address unresolved problem of key capabilities that an intelligent robot must possess to perform complex and long-horizon object manipulation tasks without human intervention. The present disclosure overcomes above mentioned challenges by decoupling imitation learning task into two parts using a decouple neural network architecture comprising two modules. A high-level module that segments out sequence of primitive actions from video of human demonstration of a complex task and a low-level module that executes those primitives sequentially on robot. The high-level module, Task Sequencing Network (TSNet), is a hybrid neural network composed of Convolutional Neural Network (CNN), Recurrent Neural Network (RNN) with Connectionist Temporal Classification (CTC) loss, while low-level controller is built using dynamic movement primitives (DMP). The network is trained in a supervised learning setting. The CNN, RNN with CTC combination helps in efficiently segmenting task primitives in sequence for given input video demonstrations.

FIG. 4

EP 4 549 107 A1

**Description**

CROSS-REFERENCE TO RELATED APPLICATIONS AND PRIORITY

The present application claims priority from Indian patent application number 202321075843, filed on November 06, 2023.

TECHNICAL FIELD

The disclosure herein generally relates to the field of robotics and more particularly, a method and system for imitation learning in robotics for complex task learning.

BACKGROUND

Humans and chimpanzees have the unique ability to learn object manipulation actions from their environment by mere observation i.e., without any explicit teaching. This has inspired the robotics and AI community to use concepts of cognitive psychology to create intelligent robots that could match human dexterity through a similar learning paradigm of avoiding explicit task-specific programming. In this pursuit, imitation learning (IL) has gained traction in robotic control in recent years.

Traditionally, IL methodologies require explicit robot states and actions from the demonstration, more commonly known under the umbrella of Learning from Demonstration (LfD). The algorithms directly map robot states to actions through a nonlinear function. In this paradigm, dynamic movement primitives (DMPs) have gained popularity. DMPs follow the procedure of kinesthetic demonstration of a movement trajectory which is then learnt using a set of differential equations. The trajectory can then be reproduced with different start and goal positions for different objects. DMPs have shown success in short-horizon1 manipulations tasks but their use in long-horizon tasks still remains a challenge. Also, these approaches fail to accommodate skill learning from expert demonstrations which are available in other forms such as videos.

Visual imitation learning accommodates skill transfer from video demonstrations to robots. These approaches are more similar to the learning capabilities of humans as they can learn by mere scene observation. Current technologies use an end-to-end approach where image space is directly mapped to the robot actions. This reduces efficiency and scope of task customization. Also, End-to-end approaches are harder to train.

The key capabilities that an intelligent robot must possess is to be able to perform complex and long-horizon object manipulation tasks without human intervention. For example, consider a service robot where it is expected to learn and perform task such as reaching to a water container - grabbing it - getting it to a glass - pouring water into the glass - bringing the container to the original place - releasing it. The position of glass and container can vary greatly in different situations. Humans on the other hand have the unique ability to learn and mimic the complex tasks with ease by joining the task primitives (that they have learnt during the course of life) in correct order. However, the existing IL methods are not equipped enough to handle such challenges.

SUMMARY

Embodiments of the present disclosure present technological improvements as solutions to one or more of the above-mentioned technical problems recognized by the inventors in conventional systems. For example, in one embodiment, a method for imitation learning in robotics for complex task learning is provided. The processor-implemented method includes collecting a plurality of videos of long-horizon task demonstration and a plurality of kinesthetic robot demonstration, sampling a plurality of frames at a plurality of time steps from each of the plurality of videos using a uniform temporal sampling to identify a sequence of one or more sub-tasks in the plurality of videos of task demonstration, and labeling the sampled plurality of frames with an associated sub-task of the one or more sub-tasks to generate a training dataset. Further, the processor-implemented method includes training a Task Sequencing Network (TSNet) using the generated training dataset comprising long-horizon task demonstration to predict the sequence of one or more sub-tasks associated with the plurality of frames, obtaining the one or more sub-tasks predicted with highest probability at each of the plurality of time steps and removing one or more duplicate sub-tasks and extra blank tokens to predict the sequence of one or more sub-tasks using the trained TSNet and building a manipulation graph from the predicted sequence of one or more sub-tasks to generate a parameterized trajectory based on the manipulation graph. Furthermore, the processor-implemented method includes training one or more Dynamic Movement Primitive (DMP) models using the plurality of the kinesthetic robot task demonstration to build a Task Agnostic DMP Library (TADL) comprising DMPs associated with the one or more sub-tasks and selecting a relevant movement for the one or more sub-tasks from the TADL to execute an intended movement comprising of one or more sub-tasks on a manipulator robotic arm.

In another embodiment, a system for imitation learning in robotics for complex task learning is provided. The system comprises a memory storing a plurality of instructions, one or more Input/Output (I/O) interfaces, and one or more hardware processors coupled to the memory via the one or more I/O interfaces. The one or more hardware processors are configured by the instructions to collect a plurality of videos of long-horizon task demonstration and a plurality of kinesthetic robot demonstration and sampling a plurality of frames at a plurality of time steps from each of the plurality of videos using a uniform temporal sampling to identify a sequence of one or more sub-tasks in the plurality of videos of task demonstration. Further, the one or more hardware processors are configured by the instructions to label the sampled plurality of frames with an associated sub-task of the one or more sub-tasks to generate a training dataset of and train a Task Sequencing Network (TSNet) using the generated training dataset comprising of long-horizon task demonstration to predict the sequence of one or more sub-tasks associated with the plurality of frames. Furthermore, the one or more hardware processors are configured by the instructions to obtain the one or more sub-tasks predicted with highest probability at each of the plurality of time steps and removing one or more duplicate sub-tasks and extra blank tokens to predict the sequence of one or more sub-tasks using the trained TSNet and build a manipulation graph from the predicted sequence of one or more sub-tasks to generate a parameterized trajectory based on the manipulation graph. Further, the one or more hardware processors are configured by the instructions to train one or more Dynamic Movement Primitive (DMP) models using the plurality of the kinesthetic robot task demonstration to build a Task Agnostic DMP Library (TADL) comprising DMPs associated with the one or more sub-tasks and select a relevant movement for the one or more sub-tasks from the TADL to execute an intended movement comprising of one or more sub-tasks on a manipulator robotic arm.

In yet another embodiment, there are provided one or more non-transitory machine-readable information storage mediums comprising one or more instructions, which when executed by one or more hardware processors causes a method for imitation learning in robotics for complex task learning is provided. The processor-implemented method includes collecting a plurality of videos of long-horizon task demonstration and a plurality of kinesthetic robot demonstration, sampling a plurality of frames at a plurality of time steps from each of the plurality of videos using a uniform temporal sampling to identify a sequence of one or more sub-tasks in the plurality of videos of demonstration, and labeling the sampled plurality of frames with an associated sub-task of the one or more sub-tasks to generate a training dataset. Further, the processor-implemented method includes training a Task Sequencing Network (TSNet) using the generated training dataset of long-horizon task demonstration to predict the sequence of one or more sub-tasks associated with the plurality of frames, obtaining the one or more sub-tasks predicted with highest probability at each of the plurality of time steps and removing one or more duplicate sub-tasks and extra blank tokens to predict the sequence of one or more sub-tasks using the trained TSNet and building a manipulation graph from the predicted sequence of one or more sub-tasks to generate a parameterized trajectory based on the manipulation graph. Furthermore, the processor-implemented method includes training one or more Dynamic Movement Primitive (DMP) models using the plurality of the kinesthetic robot task demonstration to build a Task Agnostic DMP Library (TADL) comprising DMPs associated with the one or more sub-tasks and selecting a relevant movement for the one or more sub-tasks from the TADL to execute an intended movement comprising of one or more sub-tasks on a manipulator robotic arm.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system for an imitation learning in robotics for a complex task learning, according to some embodiments of the present disclosure.

FIGS. 2A and 2B (collectively referred as FIG. 2) is a functional block diagram to illustrate a system for an imitation learning in robotics for a complex task learning, according to some embodiments of the present disclosure.

FIGS. 3A and 3B (collectively referred as FIG. 3) is an exemplary flow diagram illustrating a processor-implemented method for an imitation learning in robotics for a complex task learning, according to some embodiments of the present disclosure.

FIG. 4 is a functional block diagram to illustrate Task Agnostic DMP Library (TADL) based low level controller, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Traditionally, IL methodologies require explicit robot states and actions from the demonstration, more commonly known under the umbrella of Learning from Demonstration (LfD). The algorithms directly map robot states to actions through a nonlinear function. In this paradigm, dynamic movement primitives (DMPs) have gained popularity. DMPs follow the procedure of kinesthetic demonstration of a movement trajectory which is then learnt using a set of differential equations. The trajectory can then be reproduced with different start and goal positions for different objects. DMPs have shown success in short-horizon1 manipulations tasks but their use in long-horizon tasks still remains a challenge. Also, these approaches fail to accommodate skill learning from expert demonstrations which are available in other forms such as videos.

Visual imitation learning accommodates skill transfer from video demonstrations to robots. These approaches are more similar to the learning capabilities of humans as they can learn by mere scene observation. Current technologies use an end-to-end approach where image space is directly mapped to the robot actions. This reduces efficiency and scope of task customization. Also, End-to-end approaches are harder to train.

The key capabilities that an intelligent robot must possess is to be able to perform complex and long-horizon object manipulation tasks without human intervention. For example, let us consider a service robot where it is expected to learn and perform task such as reaching to a water container - grabbing it - getting it to a glass - pouring water into the glass - bringing the container to the original place - releasing it. The position of glass and container can vary greatly in different situations. Humans on the other hand have the unique ability to learn and mimic the complex tasks with ease by joining the task primitives (that they have learnt during the course of life) in correct order. However, the existing IL methods are not equipped enough to handle such challenges.

Embodiments herein provide a method and system for an imitation learning in robotics for complex task learning. The present disclosure overcomes the above mentioned challenges by decoupling the imitation learning task into two parts using a decouple neural network architecture comprising two modules. A high-level module that segments out the sequence of primitive actions from video of human demonstration of a complex task and a low-level module that executes those primitives sequentially on the robot. The high level module (referred as Task Sequencing Network (TSNet)) is a hybrid neural network composed of Convolutional Neural Network (CNN), Recurrent Neural Network (RNN) with Connectionist Temporal Classification (CTC) loss, while the low-level controller is built using dynamic movement primitives (DMP). The network is trained in a supervised learning setting. The Convolutional Neural Network (CNN), Recurrent Neural Network (RNN) with Connectionist Temporal Classification (CTC) combination helps in efficiently segmenting the task primitives in sequence for a given input video demonstrations.

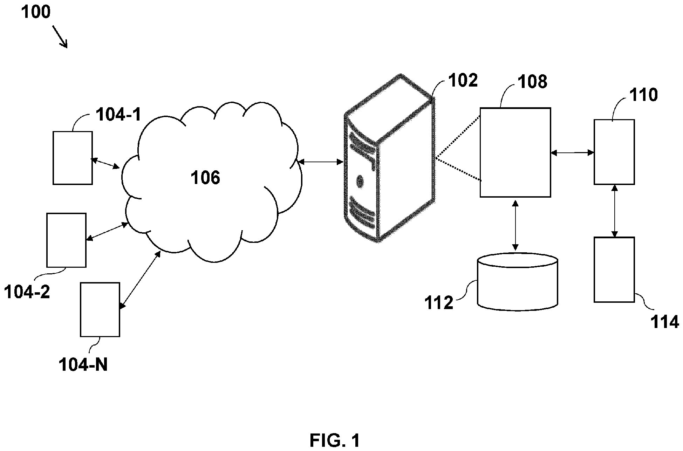

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates a block diagram of a system for generating ancillary bundled offers by jointly optimizing the customer bundle preferences of ancillary product bundles, in accordance with an example embodiment. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 are communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH®, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

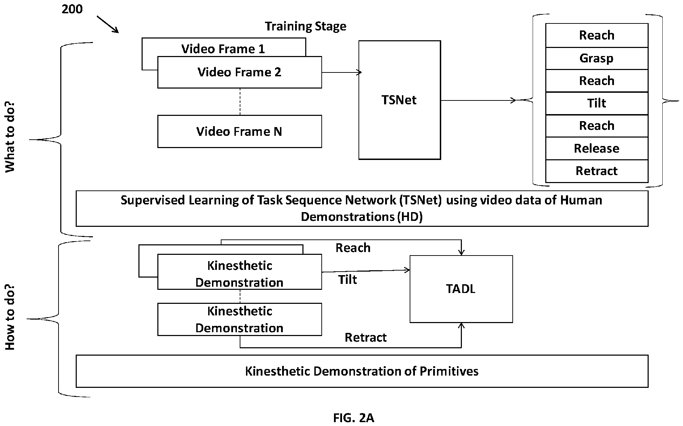

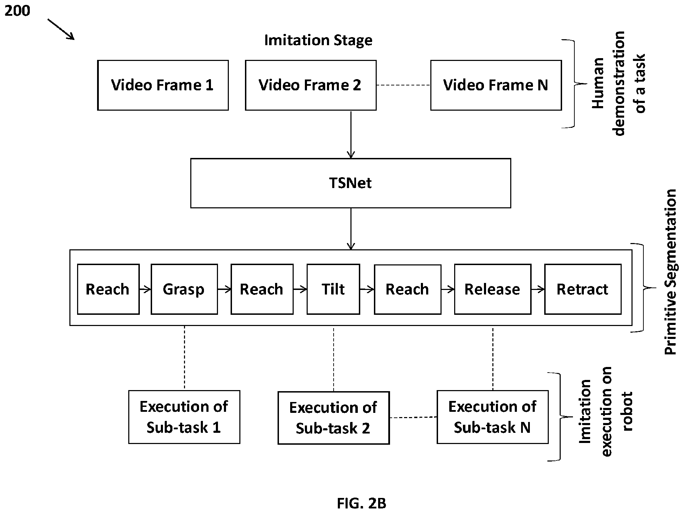

FIGS. 2A and 2B (collectively referred as FIG. 2) is a functional block diagram 200 to illustrate the system 100 for an imitation learning in robotics for a complex task learning, according to some embodiments of the present disclosure. In one embodiment, the system 100 is configured to decouple task segmentation and skill encoding during the learning cycle by proposing a Task Sequencing Network (TSNet) associated with the Task Agnostic DMP Library (TADL). The TSNet, a high-level controller, segments out one or more primitive actions present in the video of a human demonstration and the TADL executes the one or more primitives in a predefined sequence on a robot. The TSNet gauges the intent (to be imitated) of the human in the demonstration and the TADL is responsible for imitating the intent by the robot.

In one embodiment, firstly the TADL is designed. One or more kinesthetic Robot Demonstrations (RD) are collected by manually actuating the manipulator robotic arm for a plurality of primitive actions. During RD, the joint angle data of the manipulator is recorded and is used to train the Dynamic Movement Primitives (DMPs) model for each of the one or more primitive actions. Building of the TADL is theoretically a one-time activity because the primitive and short-horizon actions defined in the TADL are not specific to any task (task agnostic) and found universally in various object manipulation tasks.

In another embodiment, the TSNet is a hybrid deep neural network composed of three components: layers of CNN followed by RNN coupled with a Connectionist Temporal Classification (CTC) loss function. The TSNet is trained in a supervised learning setting using a video data of human demonstration for one or more tasks outlined in Table 1. The supervision helps the TSNet to identify one or more task primitives involved in a demonstration with correct sequence. During the test phase, the trained TSNet predicts task primitives in their sequential order given a video of a human demonstration. The parameters of segmented primitives are then searched in the TADL and executed on a real robot as per the sequence predicted by the TSNet.

**Table 1**

| Task | Label |
|------|-------|
| Liquid Pouring | Reach - Grasp - Reach - Tilt - Reach - Release - Retract |
| Stack | Reach - Grasp - Reach - Release - Retract |
| Push | Reach - Reach - Retract |
| Pick | Reach - Grasp - Reach - Reach - Release - Retract |
| Liquid Mixing | Reach - Grasp - Reach -Stir- Reach - Release - Retract |
| Table Cleaning | Reach - Grasp - Wipe - Release - Retract |
| Place in Basket | Reach - Grasp - Reach - Release - Retract |
| Object Rotation | Reach - Grasp - Rotate - Release - Retract |
| Poke | Reach - Press - Retract |

It would be appreciated that the use of CTC loss function has been successful in sequence modelling of natural languages. It helps RNN to be used directly for sequence modelling while removing the need of pre-segmented training data and post-processed output. Herein, the CTC loss function is used for subtask/task primitives sequencing.

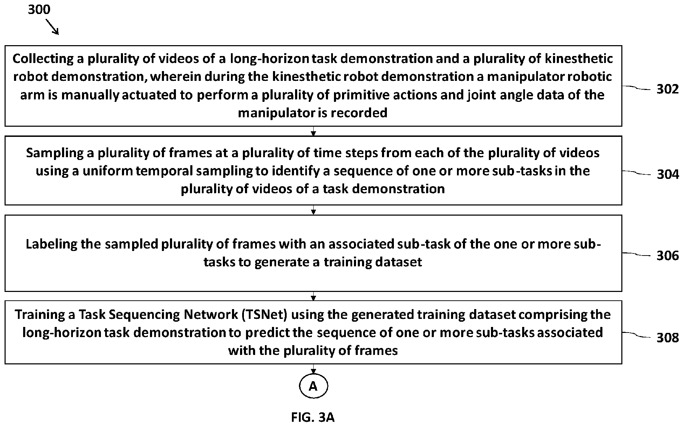

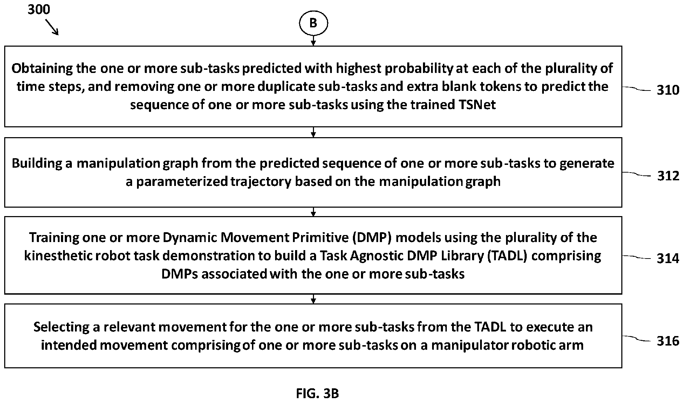

FIG. 3A and 3B (collectively referred as FIG. 3) is a flow diagram illustrating a processor-implemented method 300 for an imitation learning in robotics for a complex task learning implemented by the system 100 of FIG. 1. Functions of the components of the system 100 are now explained through steps of flow diagram in FIG. 3, according to some embodiments of the present disclosure.

Initially, at step 302 of the processor-implemented method 300, the one or more hardware processors 108 are configured by the programmed instructions to collect a plurality of videos of a kinesthetic robot long-horizon task demonstration and a plurality of kinesthetic robot demonstration, wherein during the kinesthetic robot demonstration a manipulator robotic arm is manually actuated to perform a plurality of primitive actions and joint angle data of the manipulator is recorded.

At the next step 304 of the processor-implemented method 300, the one or more hardware processors 108 are configured by the programmed instructions to sampling a plurality of frames at a plurality of time steps from each of the plurality of videos using a uniform temporal sampling to identify a sequence of one or more sub-tasks in the plurality of videos of a kinesthetic robot demonstration.

In one example, consider $D$ is a set of human demonstration from a distribution of task $\mathcal{H}_{\mathcal{F}XS}$. Here $\mathcal{F} \in \Re^n$ is the $n$-dimensional feature space of all the sequences and $S = L$ is the set of all associated subtask/task primitives which has label from L. Each element in $D$ is a tuple of {F, s} with $F = \{X_1, X_2, ..., Xv\}$ being a particular demonstration of length $V$

and the associated subtask sequence is provided in $s = \{s_1, s_2, ... , s_T\}$ of length $T$ where $T \leq V$. Generally, number of subtasks involved in a demonstration is lower than the number of time frames in demonstration. The idea here is to learn a temporal map $g: F \rightarrow S$ using the demonstration $D$ to predict the sequencing of subtask/task primitives involved in the novel inputs sampled from the distribution $\mathcal{H}_{\mathcal{FXS}}$ while minimizing an appropriate loss function.

At the next step 306 of the processor-implemented method 300, the one or more hardware processors 108 are configured by the programmed instructions to label the sampled plurality of frames with an associated sub-task of the one or more sub-tasks to generate a training dataset of kinesthetic robot demonstration.

In one example, for an input video, 10 frames are sampled with uniform temporal spacing from start to end. The frames are concatenated to form a single image of size 30x800x3 and subsequently converted to grayscale image. It is then followed by four pairs of convolutional and max pool layer. All convolutional layers have filters of size 3x3, stride 1, activation function i.e., rectified linear unit (ReLU) and padding to preserve shape. Multiple layers of CNN and MaxPool helps to bring down the input size to the RNN layers.

In order to have a probability distribution over label sequence, the network uses a softmax output layer with two extra units than the number of primitives. The extra labels signify the probability of occurrences of the blank label and the padding. Further, a new set of labels as $L^{aug}$ by including extra labels in $L$. This essentially helps to compute the probability of all possible sequence of stitching the task primitives to form a complex and long-horizon task. Let $\Gamma: (\Re^n)^T \rightarrow (\Re^v)^T$ is a continuous map that maps an $n$-dimensional input sequence to a v-dimensional output sequence of length $T$. The weights of $\Gamma$ is trained using the demonstration D such that the output:

$$u = \Gamma(\mathrm{x}), \forall \mathrm{x} \in \Re^n \qquad (1)$$

wherein $u_i^t$ is the $i^{th}$ element of $u$, represents the activation of $i^{th}$ node at $t^{th}$ time instant. It gives the probability of occurrence of the $i^{th}$ label at the $t$. Then the probability distribution over $(L_{aug})^T$ of $T$ sequences can be found using:

$$p(l|x) = \prod_{t=1}^{T} u_{l_t}^t, \forall l \in L^{aug} \qquad (2)$$

wherein the elements of $(L_{aug})^T$ represent the sequence of task primitives and is denoted as subtask-group. It should be noted that the output of the network at different time interval has no conditional dependence on time as there is no inter connection in the output layer. It helps us to provide demonstrations of different durations with different kinds. Before moving to the next step the additional labels need to be removed from the predicted labels (this process is explained later) to get the possible set of sequences and let us denote it as $L^{final}$. Now the conditional probability $p(l|x)$ of all $l \in L^{final}$ can be obtained by summing up the all the probabilities of all the subtask-groups associated to it. Now we are ready to define g(x) that predicts the maximum probable sequence of the task primitives for a given input and it is given by-

$$g(x) = arg \max_{l \in L^{final}} p(l|x) \qquad (3)$$

wherein $g(x)$ essentially a classifier that categorizes the segments of the input video in different task primitives. Further, the network weights are updated in a direction where the likelihood of predicting the correct sequence of task primitives for all the input video demonstration increases. This maximization problem is converted to a minimization problem by defining the loss function as follows:

$$\mathcal{L}(\mathcal{F}, \mathcal{H}) = \sum_{x,s \in D} \log(p(s|x)) \qquad (4)$$

The minimization problem is solved using a gradient descent technique. The network is updated by taking the gradient of (4) with respect to the output. Considering the training examples independent of each other, the gradient can be written as:

$$\frac{\partial[-\sum_{x,s \in D} \log(p(S|X))]}{\partial u_k^t} = -\frac{\partial \log(p(S|X))}{\partial u_k^t} \qquad (5)$$

wherein, the computation of the gradient requires CTC forward-backward algorithm. Equation 5 is then used for a network training.

At the next step 308 of the processor-implemented method 300, the one or more hardware processors 108 are configured by the programmed instructions to train a Task Sequencing Network (TSNet) using the generated training dataset kinesthetic robot long-horizon task demonstration to predict the sequence of one or more sub-tasks associated with the plurality of frames. Wherein, the TSNet comprises a Convolutional Neural Network (CNN) and a Recurrent Neural Network (RNN). The RNN portion comprises of two bi-directional LSTM layers with 64 and 128 units respectively. The final layer is fully connected with 12 (10+2) units, where 10 for total primitive count in TADL, 1 for the extra blank label and 1 for padding. The network output is of dimension 50 x 12, i.e., TSNet can predict at-most a sequence of 50 primitives in a video with 10 probable options for each primitive. The output of the network needs processing before it computes the probabilities $p(l|x)$ of all $l \in L^{final}$. At this stage extra nodes are discarded and $l \in L^{final}$ is constructed. The process essentially follows two stages: selection of task primitives and removing the duplicate characters and the extra blank token. In the first stage, the task primitives with highest probability at every time step is chosen. This results a sequence of 50 primitives.

In another example, wherein the one or more task primitives are labelled as 1-reach, 3-retract, 4-grasp, 5-release.

a) 1 1 1 $\epsilon$ 4 4 1 1 $\epsilon$ 1 1 . . . 5 3 3 0 0 0 [length = 50]
b) 1$\epsilon$ 4 1 $\epsilon$ 1 5 3 0
c) 1 4 1 1 5 3 0
d) 1 4 1 1 5 3

wherein $\varepsilon$ represents the blank token in the output layer. The adjacent duplicate task primitives are merged into one. (Step: a to b). The blank token is removed (step: b to c) and then the padded label '0' is removed (step: c to d). The blank token is essential in scenarios where repetition of labels is required in concatenation. It should be noted that without the $\varepsilon$, such a scenario would not be plausible and would have merged to 14 1 5 3 instead. Since the primitive sequences are of different lengths, the labels are padded with a '0' to equalize their lengths before training.

At the next step 310 of the processor-implemented method 300, the one or more hardware processors 108 are configured by the programmed instructions to obtain the one or more sub-tasks predicted with highest probability at each of the plurality of time steps and removing one or more duplicate sub-tasks and extra blank tokens to predict the sequence of one or more sub-tasks using the trained TSNet.

In a Learning from Demonstration (LfD) framework, the significant advantage is that a nonexpert user, without any understanding of the underlying robotic system, can demonstrate a set of actions that need to be learned for a given state to achieve a desired goal. However, the following three concerns need to be accounted for: 1) correspondence problem - the difference in human and robot morphology introduces a systematic domain shift, 2) generalization to new context - intractability of teaching the robot for every possible scenario in the environment requires spatio-temporal scaling properties for a learned demonstration for generalization to unseen scenarios in robot workspace, and 3) robustness against perturbation - a robust and accurate replication of learned movements in a dynamic environment, for ex. in the presence of obstacles.

In the present disclosure, a demonstrated movement is modelled using a cartesian DMP formulation as given below:

$$\tau \dot{z} = \alpha_z(\beta_z(g - y) - z) + f(x) \qquad (6)$$

$$\tau \dot{z} = z \qquad (7)$$

where $x$ is the phase variable, $z$ is the scaled velocity of the movement, $g$ is the desired final position on the movement, and $f$ is a nonlinear forcing term. With the choice $\tau > 0$ and $\alpha_z = 4\beta_z$ the linear part of equation system becomes critically damped and $y, z$ monotonically converges to a unique attractor point at $y = g$; $z = 0$. $f(x)$ is defined as a linear combination of N nonlinear radial basis functions:

$$f(x) = \frac{\sum_{i-1}^{N} \omega_i \psi_i(x)}{\sum_{i-1}^{N} \psi_i(x)} \, x(g - y_0) \qquad (8)$$

$$\psi_i(x) = \exp\left(-h_i(x - c_i)^2\right) \qquad (9)$$

wherein $c_i$ are the centers of gaussians distributed along the phase of the movement and $h_i$ their widths.
The phase x has been introduced to avoid explicit time dependency. Its evolution follows the first order linear

dynamics:

$$\tau\dot{x} = -\alpha_x x, \qquad\qquad (10)$$

wherein $\alpha_x > 0$ and x (0) = 1.

At the next step 312 of the processor-implemented method 300, the one or more hardware processors 108 are configured by the programmed instructions to build a manipulation graph from the predicted sequence of one or more sub-tasks to generate a parameterized trajectory based on the manipulation graph.

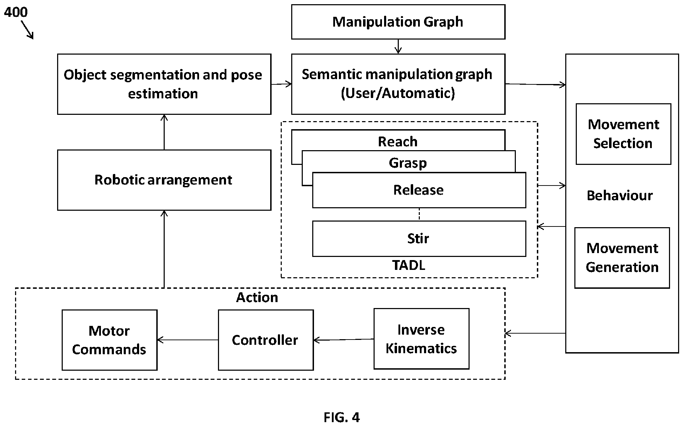

FIG. 4 is a functional block diagram to illustrate a Task Agnostic DMP Library (TADL) based low level controller, according to some embodiments of the present disclosure. Herein, The TADL is built using basic movement primitives that forms the basis of universal set of robotic manipulations. The plurality of kinesthetic robot demonstration is collected for each of the one or more primitive actions. The plurality of kinesthetic robot demonstration is collected using a predefined manipulator arm in gravity compensated mode. The collected plurality of kinesthetic robot demonstration is used to train DMP models for each of the one or more movement primitives and consequently stored in the TADL. It would be appreciated that the design of TADL to be altered and augmented as further research builds.

At the next step 314 of the processor-implemented method 300, the one or more hardware processors 108 are configured by the programmed instructions to train one or more Dynamic Movement Primitive (DMP) models using the plurality of the kinesthetic robot long-horizon task demonstration to build a Task Agnostic DMP Library (TADL) comprising DMPs associated with the one or more sub-tasks.

Finally, at the last step 316 of the processor-implemented method 300, the one or more hardware processors 108 are configured by the programmed instructions to selecting, via the one or more hardware processors, a relevant movement for the one or more sub-tasks from the TADL to execute an intended movement comprising of one or more sub-tasks on a manipulator robotic arm.

**Experiments:**

A 6 DOF UR 10 robot manipulator is used with a RGBD realsense-D435i sensor mounted on eye-in-hand configuration. A customized 2 finger gripper built using a Grabber Reacher with rotating jaw is mounted to the robot end-effector. A table with 10 objects for object manipulation is placed in the robot workspace. The proposed imitation learning framework is tested for three different robotic manipulation tasks of liquid pouring, table cleaning and object placing. To test the entire framework in a real robot, the realistic human demonstration dataset was used for the three tasks. Human demonstration videos are provided for each of the three tasks. The TSNet predicts the sequence of primitives (manipulation graph) for each task:

(a) table cleaning: reach - grasp - wipe - release - retract,
(b) object placing: reach - grasp - reach - release - retract and
(c) liquid pouring: reach - grasp - reach - tilt-reach- release - retract.

These primitives in manipulation graph in each case is attached with semantic goals using perception module to generate semantic manipulation graph. Finally, the semantic manipulation graph is executed by low level controller using TADL. The execution steps are shown in Fig. 14. Object and scene configuration differed in human demonstrations and robot workspace during experiments. This validation demonstrates the usability of the generalized decoupled imitation learning framework for complex robotic tasks.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of long-horizon object manipulation tasks by an intelligent robot without human intervention. Embodiments herein provide a decoupled architecture for an imitation learning. A high-level module does primitive action segmentation while the low-level controller is responsible for sequential action execution on the robot. The high-level controller is a novel hybrid neural network with CTC loss function that helps avoid the tedious and intractable task of frame-wise labelling, by requiring only the final sequence of primitives as label. A universal set of DMPs is proposed for the low-level control.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300), comprising:

   collecting (302), via an input/output interface, a plurality of videos of a long-horizon task demonstration and a plurality of kinesthetic robot demonstration, wherein during the kinesthetic robot demonstration a manipulator robotic arm is manually actuated to perform a plurality of primitive actions and joint angle data of the manipulator is recorded;
   sampling (304), via one or more hardware processors, a plurality of frames at a plurality of time steps from each of the plurality of videos using a uniform temporal sampling to identify a sequence of one or more sub-tasks in the plurality of videos of a task demonstration;
   labeling (306), via the one or more hardware processors, the sampled plurality of frames with an associated sub-task of the one or more sub-tasks to generate a training dataset;
   training (308), via the one or more hardware processors, a Task Sequencing Network (TSNet) using the generated training dataset comprising the long-horizon task demonstration to predict the sequence of one or more sub-tasks associated with the plurality of frames;
   obtaining (310), via the one or more hardware processors, the one or more sub-tasks predicted with highest probability at each of the plurality of time steps, and removing one or more duplicate sub-tasks and extra blank tokens to predict the sequence of one or more sub-tasks using the trained TSNet;
   building (312), via the one or more hardware processors, a manipulation graph from the predicted sequence of one or more sub-tasks to generate a parameterized trajectory based on the manipulation graph;

training (314), via the one or more hardware processors, one or more Dynamic Movement Primitive (DMP) models using the plurality of the kinesthetic robot task demonstration to build a Task Agnostic DMP Library (TADL) comprising DMPs associated with the one or more sub-tasks; and

selecting (316), via the one or more hardware processors, a relevant movement for the one or more sub-tasks from the TADL to execute an intended movement comprising of one or more sub-tasks on a manipulator robotic arm.

2. The processor-implemented method (300) as claimed in claim 1, wherein the TSNet comprises a Convolutional Neural Network (CNN) and a Recurrent Neural Network (RNN).

3. The processor-implemented method (300) as claimed in claim 2, wherein the CNN is trained to classify the plurality of frames.

4. The processor-implemented method (300) as claimed in claim 2, wherein the RNN is trained to learn the temporal relationship between the plurality of frames.

5. The processor-implemented method (300) as claimed in claim 2, wherein the CNN and the RNN are trained using a Connectionist Temporal Classification (CTC) loss function.

6. A system (100) comprising:

a memory (110) storing instructions;
one or more Input/Output (I/O) interfaces (104); and
one or more hardware processors (108) coupled to the memory (110) via the one or more I/O interfaces (104), wherein the one or more hardware processors are configured by the instructions to:

collect a plurality of videos of a long-horizon task demonstration and a plurality of kinesthetic robot demonstration, wherein during the kinesthetic robot demonstration a manipulator robotic arm is manually actuated to perform a plurality of primitive actions and joint angle data of the manipulator is recorded;
sampling a plurality of frames at a plurality of time steps from each of the plurality of videos using a uniform temporal sampling to identify a sequence of one or more sub-tasks in the plurality of videos of a task demonstration;
label the sampled plurality of frames with an associated sub-task of the one or more sub-tasks to generate a training dataset;
train a Task Sequencing Network (TSNet) using the generated training dataset comprising the long-horizon task demonstration to predict the sequence of one or more sub-tasks associated with the plurality of frames;
obtain the one or more sub-tasks predicted with highest probability at each of the plurality of time steps, and removing one or more duplicate sub-tasks and extra blank tokens to predict the sequence of one or more sub-tasks using the trained TSNet;
build a manipulation graph from the predicted sequence of one or more sub-tasks to generate a parameterized trajectory based on the manipulation graph;
train one or more Dynamic Movement Primitive (DMP) models using the plurality of the kinesthetic robot task demonstration to build a Task Agnostic DMP Library (TADL) comprising DMPs associated with the one or more sub-tasks; and
select a relevant movement for the one or more sub-tasks from the TADL to execute an intended movement comprising of one or more sub-tasks on a manipulator robotic arm.

7. The system (100) as claimed in claim 6, wherein the TSNet comprises a Convolutional Neural Network (CNN) and a Recurrent Neural Network (RNN).

8. The system (100) as claimed in claim 7, wherein the CNN is trained to classify the plurality of frames.

9. The system (100) as claimed in claim 7, wherein the RNN is trained to learn the temporal relationship between the plurality of frames.

10. The system (100) as claimed in claim 7, wherein the CNN and the RNN are trained using a Connectionist Temporal Classification (CTC) loss function.

11. One or more non-transitory machine-readable information storage mediums comprising one or more instructions which when executed by one or more hardware processors cause:

collecting, via an input/output interface, a plurality of videos of a long-horizon task demonstration and a plurality of kinesthetic robot demonstration, wherein during the kinesthetic robot demonstration a manipulator robotic arm is manually actuated to perform a plurality of primitive actions and joint angle data of the manipulator is recorded;

sampling a plurality of frames at a plurality of time steps from each of the plurality of videos using a uniform temporal sampling to identify a sequence of one or more sub-tasks in the plurality of videos of a task demonstration;

labeling the sampled plurality of frames with an associated sub-task of the one or more sub-tasks to generate a training dataset;

training a Task Sequencing Network (TSNet) using the generated training dataset comprising the long-horizon task demonstration to predict the sequence of one or more sub-tasks associated with the plurality of frames;

obtaining the one or more sub-tasks predicted with highest probability at each of the plurality of time steps, and removing one or more duplicate sub-tasks and extra blank tokens to predict the sequence of one or more sub-tasks using the trained TSNet;

building a manipulation graph from the predicted sequence of one or more sub-tasks to generate a parameterized trajectory based on the manipulation graph;

training one or more Dynamic Movement Primitive (DMP) models using the plurality of the kinesthetic robot task demonstration to build a Task Agnostic DMP Library (TADL) comprising DMPs associated with the one or more sub-tasks; and

selecting a relevant movement for the one or more sub-tasks from the TADL to execute an intended movement comprising of one or more sub-tasks on a manipulator robotic arm.

12. The one or more non-transitory machine-readable information storage mediums of claim 11, wherein the TSNet comprises a Convolutional Neural Network (CNN) and a Recurrent Neural Network (RNN).

13. The one or more non-transitory machine-readable information storage mediums of claim 12, wherein the CNN is trained to classify the plurality of frames.

14. The one or more non-transitory machine-readable information storage mediums of claim 12, wherein the RNN is trained to learn the temporal relationship between the plurality of frames.

15. The one or more non-transitory machine-readable information storage mediums of claim 12, wherein the CNN and the RNN are trained using a Connectionist Temporal Classification (CTC) loss function.

**100**

**104-1**

**104-2**

**104-N**

**106**

**102**

**108**

**110**

**112**

**114**

FIG. 1

**200**

**Training Stage**

What to do?

| Video Frame 1 |
| Video Frame 2 |
| Video Frame N |

TSNet

| Reach |
| Grasp |
| Reach |
| Tilt |
| Reach |
| Release |
| Retract |

Supervised Learning of Task Sequence Network (TSNet) using video data of Human Demonstrations (HD)

How to do?

Reach

| Kinesthetic Demonstration |

Tilt

TADL

| Kinesthetic Demonstration |

Retract

Kinesthetic Demonstration of Primitives

**FIG. 2A**

**200**

**Imitation Stage**

| Video Frame 1 | Video Frame 2 | ---- | Video Frame N |

Human demonstration of a task

**TSNet**

| Reach | → | Grasp | → | Reach | → | Tilt | → | Reach | → | Release | → | Retract |

Primitive Segmentation

| Execution of Sub-task 1 | Execution of Sub-task 2 | ---- | Execution of Sub-task N |

Imitation execution on robot

**FIG. 2B**

300

Collecting a plurality of videos of a long-horizon task demonstration and a plurality of kinesthetic robot demonstration, wherein during the kinesthetic robot demonstration a manipulator robotic arm is manually actuated to perform a plurality of primitive actions and joint angle data of the manipulator is recorded — 302

Sampling a plurality of frames at a plurality of time steps from each of the plurality of videos using a uniform temporal sampling to identify a sequence of one or more sub-tasks in the plurality of videos of a task demonstration — 304

Labeling the sampled plurality of frames with an associated sub-task of the one or more sub-tasks to generate a training dataset — 306

Training a Task Sequencing Network (TSNet) using the generated training dataset comprising the long-horizon task demonstration to predict the sequence of one or more sub-tasks associated with the plurality of frames — 308

(A)

FIG. 3A

**300**

(B)

Obtaining the one or more sub-tasks predicted with highest probability at each of the plurality of time steps, and removing one or more duplicate sub-tasks and extra blank tokens to predict the sequence of one or more sub-tasks using the trained TSNet — 310

Building a manipulation graph from the predicted sequence of one or more sub-tasks to generate a parameterized trajectory based on the manipulation graph — 312

Training one or more Dynamic Movement Primitive (DMP) models using the plurality of the kinesthetic robot task demonstration to build a Task Agnostic DMP Library (TADL) comprising DMPs associated with the one or more sub-tasks — 314

Selecting a relevant movement for the one or more sub-tasks from the TADL to execute an intended movement comprising of one or more sub-tasks on a manipulator robotic arm — 316

FIG. 3B

400

| Manipulation Graph |

| Object segmentation and pose estimation | | Semantic manipulation graph (User/Automatic) |

Movement Selection

| Robotic arrangement |

Reach

Grasp

Release

Stir

TADL

Behaviour

Movement Generation

Action

| Motor Commands | | Controller | | Inverse Kinematics |

FIG. 4

**EUROPEAN SEARCH REPORT**

Application Number

EP 24 20 7212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/331962 A1 (PIRK SOEREN [US] ET AL) 20 October 2022 (2022-10-20)<br>* paragraph [0022] - paragraph [0023] *<br>* paragraph [0029] - paragraph [0031] *<br>* paragraph [0037] *<br>* paragraph [0052] - paragraph [0058] *<br>* figure 4 * | 1-15 | INV.<br>B25J9/16<br>G05B19/423 |
| A | JINGYUN YANG ET AL: "Learning Periodic Tasks from Human Demonstrations", ARXIV.ORG, CORNELL UNIVERSITY LIBRARY, 201 OLIN LIBRARY CORNELL UNIVERSITY ITHACA, NY 14853, 28 September 2021 (2021-09-28), XP091061044, * the whole document * | 1-15 | |
| A | NGUYEN ANH ET AL: "Translating Videos to Commands for Robotic Manipulation with Deep Recurrent Neural Networks", 2018 IEEE INTERNATIONAL CONFERENCE ON ROBOTICS AND AUTOMATION (ICRA), IEEE, 21 May 2018 (2018-05-21), pages 1-9, XP033403331, DOI: 10.1109/ICRA.2018.8460857 [retrieved on 2018-09-10] * the whole document * | 1-15 | **TECHNICAL FIELDS SEARCHED (IPC)**<br><br>B25J<br>G05B |
| A | US 2022/105624 A1 (KALAKRISHNAN MRINAL [US] ET AL) 7 April 2022 (2022-04-07) * the whole document * | 1-15 | |
| A | US 2023/086122 A1 (GOMBOLAY MATTHEW C [US] ET AL) 23 March 2023 (2023-03-23) * the whole document * | 1-15 | |

-/--

The present search report has been drawn up for all claims

| Place of search | Date of completion of the search | Examiner |
|---|---|---|
| The Hague | 17 March 2025 | Falconi, Riccardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG SHUO ET AL: "Learning Actions from Human Demonstration Video for Robotic Manipulation", 2019 IEEE/RSJ INTERNATIONAL CONFERENCE ON INTELLIGENT ROBOTS AND SYSTEMS (IROS), IEEE, 3 November 2019 (2019-11-03), pages 1805-1811, XP033695854, DOI: 10.1109/IROS40897.2019.8968278 [retrieved on 2020-01-23] * the whole document * ----- | 1-15 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| The Hague | 17 March 2025 | Falconi, Riccardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 7212

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2025

| Patent document cited in search report | | | Publication date | Patent family member(s) | | | Publication date |
|---|---|---|---|---|---|---|---|
| US 2022331962 | A1 | | 20-10-2022 | CN | 114423574 | A | 29-04-2022 |
| | | | | CN | 118789549 | A | 18-10-2024 |
| | | | | EP | 4003665 | A1 | 01-06-2022 |
| | | | | US | 2022331962 | A1 | 20-10-2022 |
| | | | | US | 2025058475 | A1 | 20-02-2025 |
| | | | | WO | 2021050488 | A1 | 18-03-2021 |
| US 2022105624 | A1 | | 07-04-2022 | CN | 113677485 | A | 19-11-2021 |
| | | | | EP | 3914424 | A1 | 01-12-2021 |
| | | | | US | 2022105624 | A1 | 07-04-2022 |
| | | | | WO | 2020154542 | A1 | 30-07-2020 |
| US 2023086122 | A1 | | 23-03-2023 | NONE | | | |

EPO FORM P0459

For more details about this annex : see Official Journal of the European Patent Office, No. 12/82

**EP 4 549 107 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321075843